# EUROPEAN PATENT SPECIFICATION

(11) **EP 3 739 295 B1**
(45) Date of publication and mention of the grant of the patent: **10.11.2021**
(21) Application number: 20174524.7
(22) Date of filing: 13.05.2020
(51) Int. Cl.: G01C 21/20, G08G 3/00, G06F 16/29

(54) **METHOD FOR DETERMINING AN OPTIMAL NAVAL NAVIGATION ROUTES FROM HISTORICAL GNSS DATA OF NAVAL TRAJECTORIES**
VERFAHREN ZUR BESTIMMUNG EINER OPTIMALEN NAVAL-NAVIGATIONSROUTEN AUS HISTORISCHEN GNSS-DATEN VON NAVAL-TRAJEKTORIEN
PROCÉDÉ POUR DÉTERMINER DES ITINÉRAIRES DE NAVIGATION NAVALE OPTIMAUX À PARTIR DE DONNÉES HISTORIQUES GNSS DE TRAJECTOIRES NAVALES

(30) Priority: 13.05.2019 IT 201900006772
(43) Date of publication of application: 18.11.2020
(73) Proprietor: S.A.T.E. - Systems and Advanced Technologies Engineering S.R.L., 30100 Venezia (IT)
(72) Inventor: BRIGHENTI, Chiara, 30135 Venezia (IT); BRIGHENTI, Attilio, 30121 Venezia (IT); VASCON, Sebastiano, 30124 Venezia (IT); GIUDICE, Lorenzo, 31050 Zenson di Piave (TV) (IT); FARINATI, Giacomo, 30135 Venezia (IT)
(74) Representative: Maccagnan, Matteo

(56) References cited:
- CN-A- 109 447 135
- CN-B- 104 680 187
- CN-B- 104 899 263
- HUANHUAN LI ET AL: "A Dimensionality Reduction-Based Multi-Step Clustering Method for Robust Vessel Trajectory Analysis", SENSORS, vol. 17, no. 8, 4 August 2017 (2017-08-04) , page 1792, XP055729665, ISSN: 1424-8220, DOI: 10.3390/s17081792
- Laurent Etienne ET AL: "Spatio-Temporal Trajectory Analysis of Mobile Objects following the same Itinerary", The International Archives of the Photogrammetry, Remote Sensing and Spatial Information Sciences, 31 January 2012 (2012-01-31), XP055729584, Retrieved from the Internet: URL:https://www.researchgate.net/profile/L aurent_Etienne/publication/228428857_Spati o-Temporal_Trajectory_Analysis_of_Mobile_O bjects_following_the_same_Itinerary/links/ 5c0e2c5c92851c39ebe1e030/Spatio-Temporal-T rajectory-Analysis-of-Mobile-Objects-follo wing-the-same-Itinerary.pdf [retrieved on 2020-09-10]
- PAN SHENG ET AL: "Extracting Shipping Route Patterns by Trajectory Clustering Model Based on Automatic Identification System Data", SUSTAINABILITY, vol. 10, no. 7, 2327, 5 July 2018 (2018-07-05), pages 1-13, XP002797309, DOI: 10.3390/su10072327

## Description

### REFERENCE TO CORRELATED PATENT APPLICATIONS

This patent application claims the priority of the Italian patent application No. 102019000006772 filed on 13/05/2019.

### FIELD OF THE INVENTION

The present invention relates to a method of determining optimal routes for navigating naval vehicles by analysis of historical GNSS data (preferably, but non only, in restricted waters).

In particular, the present invention contributes to the implementation of the e-navigation concept (as defined by IMO - International Maritime Organization), with primary focus on the navigation in restricted waters, such as harbours, lagoons or regions where the traffic congestion can create conditions for accidents or inefficient operations. Open sea navigation is also within the targets of the present invention.

### PRIOR ART

It must be clarified that, in the context of restricted navigation areas, there exist a limited number of possible water ways. These can be the result of morphological characteristics of the basin, such as in the Venice harbour that is inside the lagoon, or practical constraints that the port authorities impose to effectively and safely manage the ships traffic, such as in large harbours. Besides the peculiar situation of Venice, it must be remarked that large ships have limited access areas also in large harbours due to draught and the, sometimes, limited dredging activities by the port authorities.

Indeed large ships, such as deep sea container vessels, having a length of up to 400 m and a lateral windage area of up to 12,000 m², and large bulkers having a draught of up to 22 m, are facing restrictions on path, tidal water depth and challenging meteo-ocean conditions (wind, tidal current and waves) when entering and leaving a port. On top of this there are special regimes for vessels with dangerous cargoes such as the large LNG-carriers and the smaller LNG bunker barges that are now entering the large European ports.

The sheer number of vessels and the pressure to handle all those vessels in a swift and safe manner is continuously present. The freedom of manoeuvring is space wise very limited as ships traffic is already highly regulated; there is simply not so much space for this. It is the timing of all these vessel positions and speeds that is causing headaches to ship officers, pilots, tug-masters, boats-men and port authorities.

Therefore, there are not many possibilities nowadays for route deviation and variability for a large scale route inside a harbour. Instead there can be important deviations and variability at the small scale level of the route, e.g. when the ship must maneuver to enter a branch channel in the harbour or reach the loading/unloading gate.

In the traditional approach, ports have a number of guidelines for entry to the port, berthing and exit of the port, which vary according to the tide, weather conditions, traffic and vessel length, weight, draught and cargo.

Nevertheless pilots are necessary to guide operations and maneuvers in the port. Pilots are qualified to assist ship master in navigation while entering or leaving a port. It is to be stressed the fact that several accidents can be caused by faulty master/pilot relationships.

In the literature, big data techniques are being widely used to analyse trajectories and extract relevant tracks.

For example, the approach proposed by Etienne (Paper *"*SPATIO-TEMPORAL TRAJECTORY ANALYSIS OF MOBILE OBJECTS FOLLOWING THE SAME ITINERARY", Etienne L. et al., The International Archives of the Photogrammetry, Remote Sensing and Spatial Information Sciences, Vol. 38, Part II) computes the median of the points of the trajectories to extract the reference route and does not use similarity measures for trajectories. In particular, in this work the main spatial route is detected by computing the median values of the latitudes and longitudes of the trajectories, which were previously ordered according to their distance from a given starting point. The boundaries of the spatial channel are computed using the ninth deciles. Trajectories falling outside these boundaries are considered outliers by the authors and are removed from the following analysis.

The temporal information is then integrated by using the relative times and by translating the positions into a polar system that allows defining a total order for each position subset according to distance. The boundaries of the temporal boundaries are still computed by identifying the positions whose distances match the ninth decile.

Several other approaches use the DBSCAN algorithm or K-means to extract trajectories clusters (for example: Paper *"*Extracting Shipping Route Patterns by Trajectory Clustering Model Based on Automatic Identification System Data", Pan Sheng et el., Sustainability 2018, 10(7), 2327; doi:10.3390/su10072327 - Paper "A Dimensionality Reduction-Based Multi-Step Clustering Extraction method for Robust Vessel Trajectory Analysis", Huanhuan Li et el., Sensors 2017, 17, 1792; doi:10.3390/s17081792).

Patent US9256689B2 is more related to extraction of transit graphs characterised by the shortest paths among transit points.

### DESCRIPTION OF THE INVENTION

The purpose of the present invention is to provide a method of determining, through the analysis of historical GNSS data, of optimal routes for navigating naval vehicles, made of trajectories and related waypoints, said method allowing to identify in an effective and efficient manner the optimal routes by determining the most used routes through a specific area and the influence of hydro/meteo factors on the tracks.

According to the present invention there is provided a method of determining by analysis of historical GNSS data of optimal routes for navigating naval vehicles, which optimal routes are made of trajectories and related waypoints, as claimed in the attached claims.

The claims describe preferred embodiments of the present invention forming an integral part of this description.

### BRIEF DESCRIPTION OF THE DRAWINGS

The present invention will now be described with reference to the accompanying drawings, which illustrate a non-limiting embodiment thereof, in which:
- Figure 1 is a schematic bidimensional illustration showing the differences between the Euclidean matching and the Dynamic Time Warping matching;
- Figure 2 is a tridimensional graph showing the waypoints spatial tolerance identification;
- Figure 3 is a tridimensional graph showing extracted waypoints clouds;
- Figure 4 is a marine map showing an example of waypoints visualisation: the points are coloured based on the time at which the ships are in that geographical position and the black dashed lines contour the waypoints area;
- Figure 5 is an example of graph showing, for each waypoint, the distribution of the time duration to reach the positions falling inside the waypoint cloud contour (black dashed line in Figure 4);
- Figure 6 is a schematic representation of the structure of a "boxplot"; and

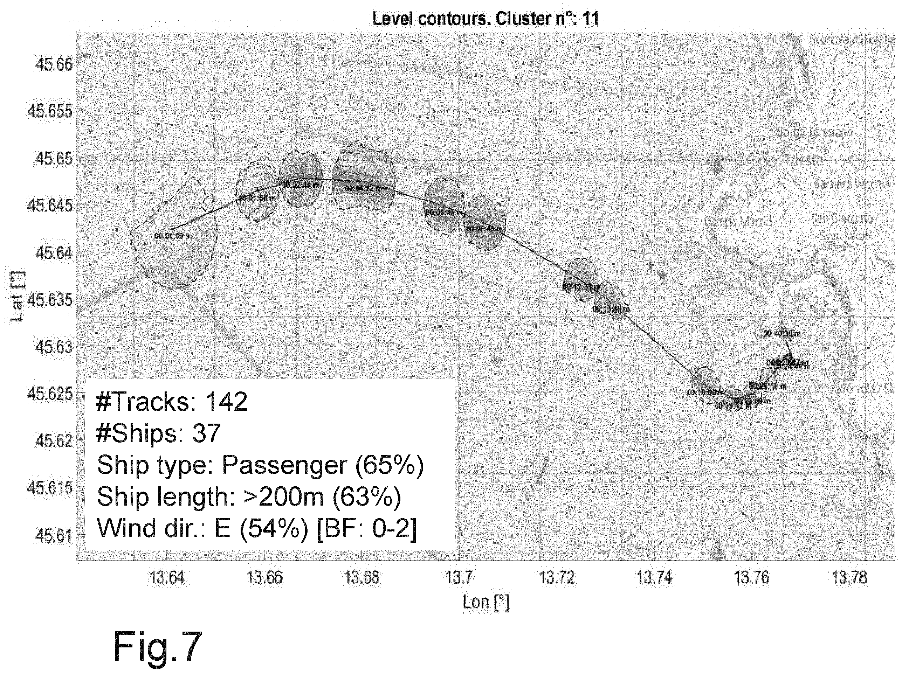

- Figure 7 is a marine map showing an example of a passenger ingoing path.

### PREFERRED EMBODIMENTS OF THE INVENTION

All the modern ships are provided with a maritime GNSS (Global Navigation Satellite System) that, during the navigation, cyclically determines and store the information of the current time, position and speed.

The determination method of the present invention elaborates historical GNSS data of many ships during the navigation in the same waters (harbour, lagoon or region where the traffic congestion can create conditions for accidents or inefficient operations) to extract preferred routes (typical trajectories) performed by ships that could be suggested to other ships with similar characteristics under similar environmental conditions to perform port entrance and exit maneuvers, or navigation in open sea. In particular, the historical data collected through the GNSS system include historical spatio-temporal trajectories consisting of sequences of points, each of which is defined by a position x, a position y and a time value t.

The first step performed by the determination method is the removal of noise from the historical GNSS data, by filtering out data corresponding to unfeasible vessel speeds; in particular, thresholds are applied to the vessel speed to remove outliers in the data. In other words, in the historical GNSS data, the information related to unfeasible vessel speeds (i.e. information related to a ship navigation which is too slow or too fast to be unrealistically true) are removed as they probably contain errors or relates to unconventional maneuvers (for example in case of failures).

The second step performed by the determination method is the reduction of the historical GNSS data by using the Douglas-Peucker extraction method. The Douglas-Peucker algorithm, also known as the Ramer-Douglas-Peucker algorithm or iterative end-point fit algorithm, is an algorithm that decimates a curve composed of line segments to a similar curve with fewer points. The purpose of the algorithm is, given a curve composed of line segments (which is also called a polyline in some contexts), to find a similar curve with fewer points. The algorithm defines *"dissimilar"* based on the maximum distance between the original curve and the simplified curve (i.e. the Hausdorff distance between the curves). The simplified curve consists of a subset of the points that defined the original curve. The reduction of the number of points in a trajectory is convenient to make the computations faster and also requiring less resources in terms of memory. The goal is to retain only significant positions of a trajectory without compromising much of its precision and while keeping information about ship speed and heading changes. In particular, the reduction of the historical data of the GNSS system transforms each historical trajectory into a corresponding reduced trajectory, eliminating all the points of the historical trajectory that do not determine a change in speed and/or heading of the navigating vehicle, i.e. maintaining only the points of the historical trajectory that determine a change of the speed and/or direction of the navigating vehicle.

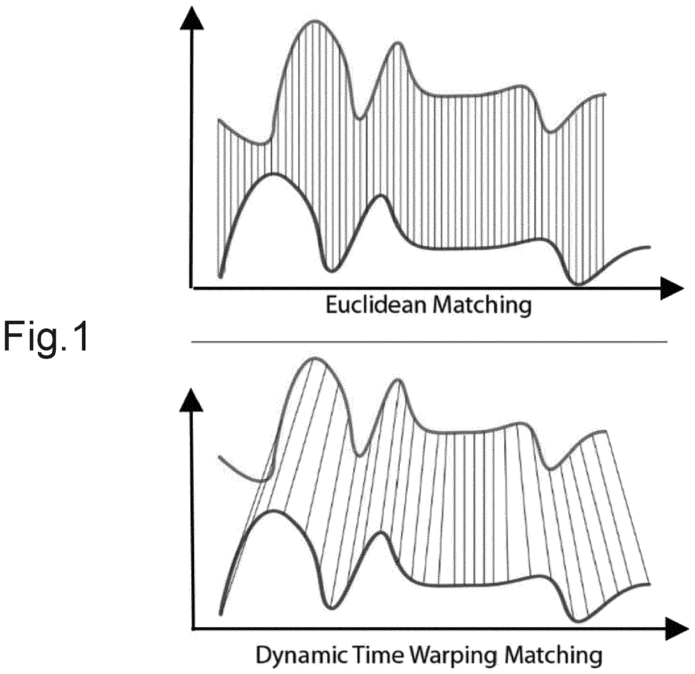

The third step performed by the determination method is to evaluate reduced trajectories similarity by using the Dynamic Time Warping (DTW) distance measure. In time series analysis, DTW is one of the algorithms for measuring similarity between two temporal sequences, which may vary in speed. For instance, similarities between two people walking could be detected using DTW, even if one person was walking faster than the other, or if there were accelerations and decelerations during the course of an observation. The DTW technique has been applied to temporal sequences of video, audio, and graphics data - indeed, any data that can be turned into a linear sequence can be analyzed with the DTW technique. To perform clustering on trajectories is necessary to apply a dis-similarity function that takes into account both the time and space information. In general, the DTW technique is a method that calculates an optimal match between two given sequences (e.g. time series) with certain restrictions. The sequences are *"warped"* non-linearly in the time dimension to determine a measure of their similarity independent of certain non-linear variations in the time dimension. Figure 1 shows the differences between the standard Euclidean matching and the DTW matching.

In summary, using preferably (but not necessarily) the DTW technique, the similarity among the reduced trajectories is evaluated, determining for each reduced trajectory a degree of similarity to all other reduced trajectories.

The fourth step performed by the determination method is to apply the Dominant Sets (DS) clustering algorithms; the aim of this fourth step is to verify whether different patterns of reduced trajectories exist for ships entering or exiting the port and assess whether the clusters extracted automatically from the data reflect the actual known traffic flows inside the ports areas. In graph theory, a dominating set for a graph G = (V, E) is a subset D of V such that every vertex not in D is adjacent to at least one member of D. The domination number γ(G) is the number of vertices in a smallest dominating set for G. The dominating set problem concerns testing whether γ(G) ≤ K for a given graph G and input K; it is a classical NP-complete decision problem in computational complexity theory[1]. Therefore it is believed that there may be no efficient algorithm that finds a smallest dominating set for all graphs, although there are efficient approximation algorithms, as well as both efficient and exact algorithms for certain graph classes. Basically, the fourth step foresees the application of a clustering algorithm, such as the Dominant Sets algorithm, that based on the similarity of the reduced trajectories, forms one or several groups of reduced trajectories, assigning to each gourp only those reduced trajectories that are similar among them.

The fifth step performed by the determination method is to perform the extraction of reduced trajectories waypoints (including spatio-temporal channel) from the clusters formed by applying the DS clustering algorithms; in particular, the extraction method extracts the waypoints of the reduced trajectories and their tolerance in the space and time domain. These waypoints shall be the information provided to the end user of the certified paths (i.e. to the pilot of a ship) and visualised on a screen to monitor maritime operations; in other words, these waypoints are part of the optimal routes that will be provided to the final user of the certified paths to maneuver accordingly the naval vehicles (i.e. the naval vehciles are maneuvered to follow the optimal routes that include a sequence of waypoints).

The DS algorithms provide as output one centroid for each cluster, which centroid represents the center of the cluster; for example, the centroid may be computed as mean of all the reduced trajectories belonging to that cluster. It is assumed that the centroid of a cluster (provided as output by the DS algorithm) represents the most representative reduced trajectory of that cluster. In other words, from each cluster, the most representative reduced trajectory is extracted (consisting of the centroid of the cluster) by means of the DS clustering algorithm, and this most representative reduced trajectory is identified as an optimal route to be provided to the final user of the certified paths to maneuver accordingly the naval vehicles.

The approach is based on the centroids output of the DS algorithm, which are the (real) trajectories that are the most representative of each cluster of trajectories. The points of the centroid (i.e. the reduced trajectory) represent the waypoints. The tolerance bounds around each waypoint are determined based on the points (time and space) of all the trajectories that belong to that cluster.

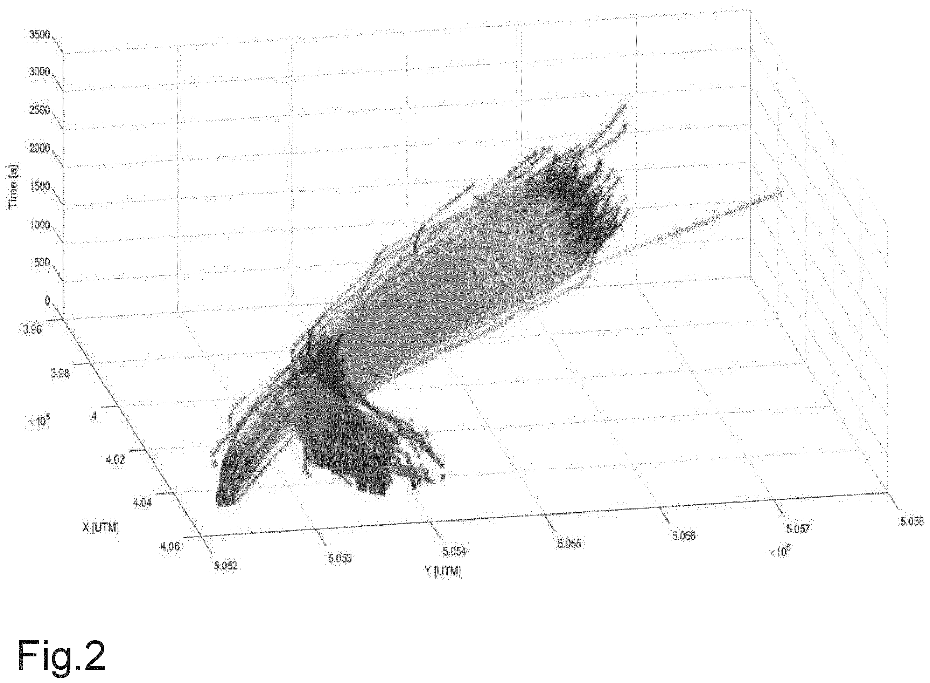

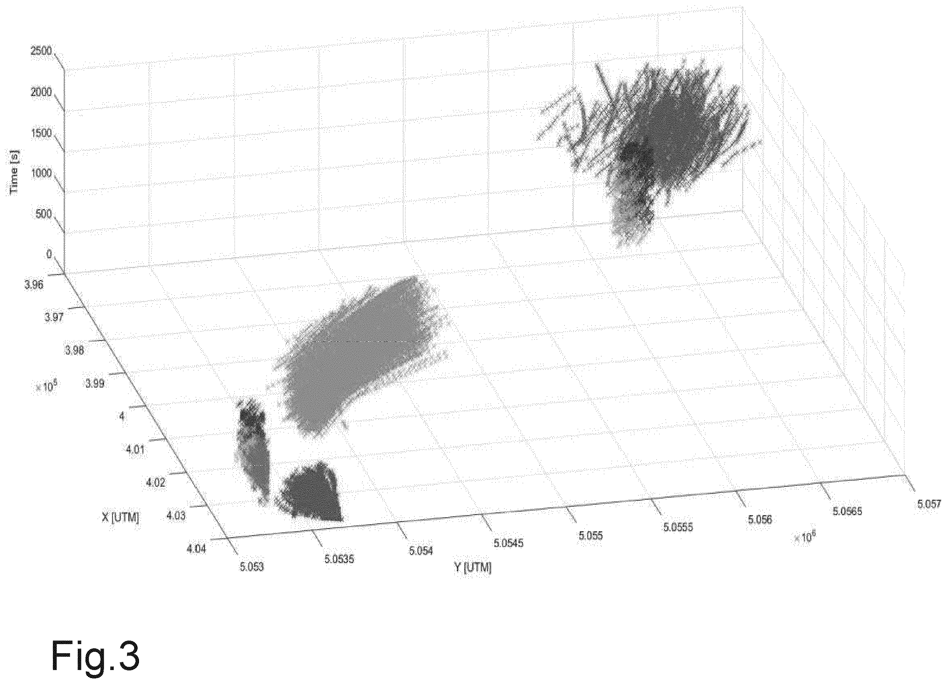

The calculation steps are the following (for each cluster of trajectories):
I. The centroid reduced trajectory (i.e. the most representative reduced trajectory) is used to initialise a k-nearest neightbour clustering algorithm, i.e. a kNN clustering algorithm (in this application k is set to 1, meaning that each point of the reduced trajectories is assigned to the single closest waypoint) that is applied to all the points of all the reduced trajectories belonging to that cluster. The result is as that shown in Figure 2, which shows all the reduced trajectories belonging to a same cluster identified by Dominant Set. The points are grouped based only on their position and their colour identifies the group they belong to. This creates groups of points in the neighborhood of the centroid's waypoints. In other words, each most representative reduced trajectory of a cluster is used to initialise a k-NN clustering algorithm that is applied to all the points of all the reduced trajectories belonging to that cluster, to create the groups of points around the points of the most representative reduced trajectory.
II. The points groups obtained at the previous step are filtered to obtain non-overlapping groups around each waypoint, which are called waypoint cloud. This is done because it is preferable that each waypoint has non-overlapping tolerance bounds with other adjacent waypoints. In other words, the groups of points are filtered to obtain waypoints clouds, each corresponding to a group of points obtained after having removed the points of that group that overlap to other groups, so to obtain groups of points that are non-overlapping among them around each point of the most representative trajectory (centroid).
III. Finally, into each waypoint cloud, the time values associated to each point is analysed to create time boundaries for each waypoint, thereby removing outliers. This is performed by discarding the points of trajectories falling outside the 95th percentile of the time values inside each waypoint cloud. The result is show in Figure 3. In other words, within each waypoint cloud, the time values t associated to each point are analysed to determine the contour of the waypoint cloud, thereby removing the outliers.

The waypoints of each optimal route consist of the points of the corresponding most representative reduced trajectory (i.e. the centroid of the corresponding cluster) and of the corresponding waypoints clouds.

Figure 2 shows the waypoints spatial tolerance identification, while Figure 3 shows extracted waypoints clouds.

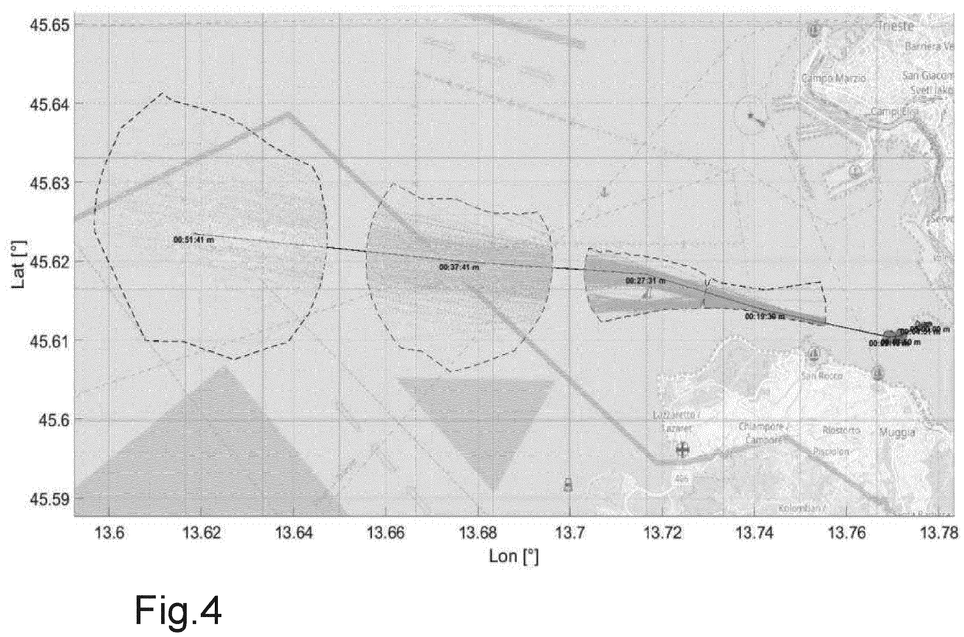

The (reference) most representative reduced trajectory and its waypoint clouds are then presented as result of the analysis as shown in Figure 4, where the most representative reduced trajectory (the cluster centroid) is represented by the continuous black line. The coloured tracks are a subset of the reduced trajectories belonging to that cluster, which are plotted to visualise the cluster variability and the waypoint clouds.

The waypoints are indicated by markers on the centroid (most representative reduced trajectory) indicating the time at which the ship should reach that waypoint (in the format HH:MM:SS). The waypoint tolerance in the space and time domain is represented by the black dashed line around each waypoint. The reason why the boundary is not a circle is that circles are initially defined around each waypoint, but then are cut to visualise only the boundaries of the navigation areas that have been actually covered by ships in the historical data available. The colour of each point of the reduced trajectories is associated to the time values. This allows having an overview also of the time variability into each waypoint cloud. If the colour into each waypoint cloud is homogeneous, then the time variability is smaller than in case the colour varies inside the same waypoint cloud. The use of colours also allows easily understanding whether a trajectory is entering or exiting the port. It is worth specifying that this is obtained by applying a temporal transformation to the reduced trajectories, so that all reduced trajectories start at time zero (in other words the initial time of each trajectory is subtracted to the time vector).

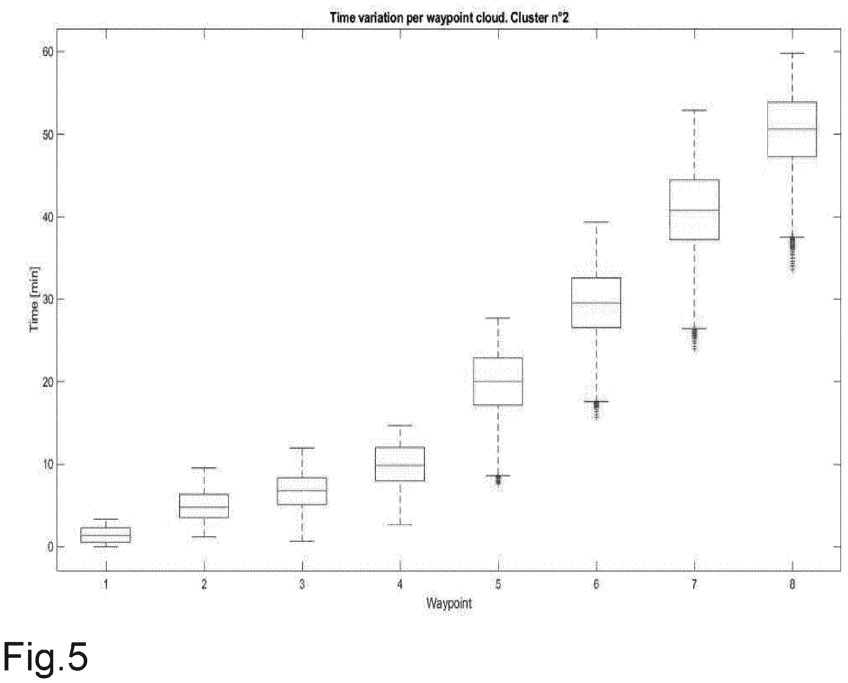

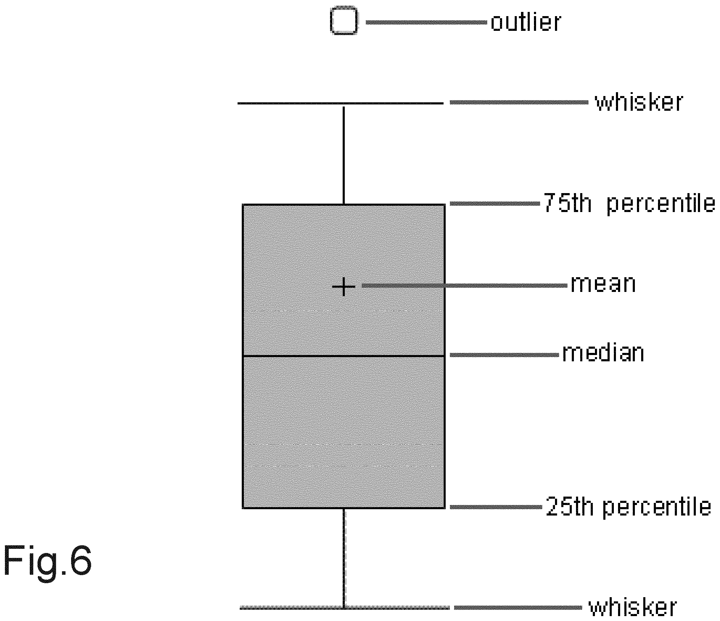

In addition, the waypoint time variability can be better visualised by a boxplot, as shown in Figure 5; the boxplot is a work tool allowing the graphical representation of a set of measures, highlighting its quantiles, as shown in Figure 6. Therefore, this plot shows the distribution of the times variations into each waypoint, based on data of the reduced trajectories belonging to the cluster. The time values plotted in each box of Figure 5 are the time stamps of all the points belonging to the waypoint cloud, i.e. of all the reduced trajectories crossing the waypoint cloud.

In the traditional approach, ports have a number of guidelines for entry to the port, berthing and exit of the port, which vary according to the tide, weather conditions, traffic and vessel length, weight, draught and cargo.

Nevertheless pilots are necessary to guide operations and maneuvers in the port. Pilots are qualified to assist ship master in navigation while entering or leaving a port. It is to be stressed the fact that several accidents can be caused by faulty master/pilot relationships.

In this context, even in harbours where the canals width is less than twice the maximum ship breadth, the suggestion of a *"preferred route"* (optimal route) is meaningful and useful to better manage future ship navigation in harbours, especially taking into account that the *"preferred route"* (optimal route) is meant to provide not only spatial but also temporal information. Indeed, the availability of the temporal information implies that *"preferred routes"* (optimal route) could also be used to forecast the future positions of ships leading to safer operations.

This is not yet part of the traffic management in harbours, yet it would allow also optimising traffic inside the port. This because the use of *"preferred routes"* would allow knowing in advance the position of the ship in a given route, enabling improvements in routes planning and exploiting at the best the waters that may be navigated in terms of space and time under certain environmental and traffic conditions.

The results obtained in the determination method of the present invention showed that the added value of the use of big data techniques with the AIS (Automatic Identification System) tracks of vessels is that it is possible to identify in an effective and efficient manner the most used routes through a specific area and the influence of hydro/meteo factors on the tracks.

The results obtained for real data of three different ports (Trieste, Venice and Rotterdam, in particular in the Maascenter and Maasvlakte areas) showed that there is the possibility to extract relevant routes performed by the ships in particular conditions. These more relevant routes were analysed taking into account the route trajectory, route duration, ship type, ship dimensions, environmental conditions at the route start. The cohesiveness of the groups of trajectories is also used as criterion to select those paths that more reliably representative of a set of real trajectories.

The results also showed that despite several routes are common to different ship types and environmental conditions, there are some groups of trajectories that differ mainly by the type of ship following that path or by the wind force or direction. Also, there are paths that are very similar among them from the point of view of the spatial waypoints, but differ substantially for the duration of the route.

## Claims

1. A determination method of determining optimal routes for navigating naval vehicles by analysis of historical GNSS data; wherein the historical GNSS data comprise spatio-temporal historical trajectories made of sequenced of points, each defined by a position x, a position y and a time value t; each optimal route includes a sequence of waypoints; the determination method comprises the steps of:
reducing the historical GNSS data transforming each historical trajectory into a corresponding reduced trajectory, eliminating all the points of the historical trajectory that do not determine changes of speed and/or course, i.e. retaining only the points of the historical trajectory that determine changes of speed and/or course;
evaluating the similarity among reduced trajectories, thereby determining for each reduced trajectory a degree of similarity to all the other reduced trajectories;
applying a first clustering algorithm that, based on the similarity among reduced trajectories, forms one or more clusters of reduced trajectories assigning to each cluster all and only those reduced trajectories that are similar among them;
extracting the most representative reduced trajectory from each cluster formed by applying the first clustering algorithm; and
identifying the optimal routes as the most representative reduced trajectories;
the determination method is **characterized in that:**
a. each most representative reduced trajectory of a cluster is used to initialise a second clustering algorithm that is applied to all the points of all the reduced trajectories belonging to said cluster to create groups of points around the points of the most representative trajectory;
b. the groups of points are filtered to obtain waypoints clouds, each corresponding to a group of points obtained after having removed the points of that group that overlap to other groups, so to obtain groups of points that are non-overlapping among them around each point of the most representative trajectory;
c. into each waypoint cloud, the time values t associated to each point are analysed to create time boundaries for each waypoint;
d. the waypoints of each optimal route consist of the points of the corresponding most representative trajectory and of the corresponding waypoint clouds.

2. The determination method according to claim 1, wherein the second clustering algorithm is a clustering algorithm of k-NN type.

3. The determination method according to claim 2, wherein in the second clustering algorithm of k-NN type, k is set to 1, meaning that each point of the reduced trajectories is assigned to the single closest waypoint.

4. The determination method according to claim 1, 2 or 3, wherein the outliers are removed by discarding the points of reduced trajectories falling outside the 95th percentile of the time values inside each waypoint cloud.

5. The determination method according to one of the claims from 1 to 4, wherein each waypoint of a most representative trajectory includes a tolerance in the space and time.

6. The determination method according to claim 5, wherein the tolerance of each waypoint in the space and temporal dimensions is initially a circle and is subsequently cut to visualise only the boundaries of the navigation areas that have been actually navigated by the naval vehicles according to the historical GNSS data.

7. The determination method according to one of the claims from 1 to 6, wherein tolerance bounds around each waypoint are determined based on the points in time and in space of all the reduced trajectories that belong to that cluster.

8. The determinatin method according to one of the claims from 1 to 7 and comprising the step of removing noise by filtering out from the historical GNSS data those informations corresponding to unfeasible vessel speed values, i.e. by applying thresholds to the vessel speed to remove outliers in the historical GNSS data.

9. The determination method according to one of the claims from 1 to 8, wherein the historical GNSS data are reduced using the Douglas-Peucker points reduction method.

10. The determination method according to one of the claims from 1 to 9, wherein the similarity among reduced trajectories is measured by using the Dynamic Time Warping distance measure.

11. The determination method according to one of the claims from 1 to 10, wherein the first clustering algorithm is the Dominant Sets clustering algorithm.

12. The determination method according to claim 11,
wherein for each cluster of reduced trajectories, its most representative reduced trajectory corresponds to the centroid that is output by the Dominant Sets clustering algorithm and the points of the centroid represent the waypoints of the most representative reduced trajectory.

13. The determination method according to claim 12, wherein each waypoint is marked by a marker on the centroid that indicate the time at which the naval vehicle should reach that waypoint.

14. A maneuvring method of a naval vehicle comprising the steps of:
determining at least one optimal route by means of the determination method according to one of the claims from 1 to 13; and
maneuvring the naval vehicle to follow the optimal route.

15. Computing system comprising a processor adapted to perform the determination method according to one of the claims from 1 to 13.

## Patentansprüche

1. Bestimmungsverfahren zum Bestimmen optimaler Routen zum Navigieren von Seefahrzeugen durch Analysieren historischer GNSS-Daten, wobei die historischen GNSS-Daten raumzeitliche historische Trajektorien enthalten, die aus einer Folge von Punkten bestehen, die jeweils durch eine Position x, eine Position y und einen Zeitwert t definiert sind, wobei jede optimale Route eine Folge von Wegepunkten enthält,
wobei das Bestimmungsverfahren die Schritte aufweist:
Reduzieren der historischen GNSS-Daten durch Transformieren jeder historischen Trajektorie in eine entsprechende reduzierte Trajektorie, Eliminieren aller Punkte der historischen Trajektorie, die keine Geschwindigkeits- und/oder Kursänderungen bestimmen, d.h. Beibehalten nur der Punkte der historischen Trajektorie, die Geschwindigkeits- und/oder Kursänderungen bestimmen;
Auswerten der Ähnlichkeit zwischen reduzierten Trajektorien, wodurch für jede reduzierte Trajektorie ein Grad der Ähnlichkeit mit allen anderen reduzierten Trajektorien bestimmt wird;
Anwenden eines ersten Clustering-Algorithmus, der basierend auf der Ähnlichkeit zwischen reduzierten Trajektorien einen oder mehrere Cluster von reduzierten Trajektorien bildet, wobei jedem Cluster alle und nur diejenigen reduzierten Trajektorien zugewiesen werden, die untereinander ähnlich sind;
Extrahieren der repräsentativsten reduzierten Trajektorie von jedem Cluster, der durch Anwenden des ersten Clustering-Algorithmus gebildet wird; und
Identifizieren der optimalen Routen als die repräsentativsten reduzierten Trajektorien,
wobei das Bestimmungsverfahren **dadurch gekennzeichnet ist, dass**:
a. jede repräsentativste reduzierte Trajektorie eines Clusters verwendet wird, um einen zweiten Clustering-Algorithmus zu initialisieren, der auf alle Punkte aller reduzierten Trajektorien, die diesem Cluster zugehörig sind, angewendet wird, um Punktgruppen um die Punkte der repräsentativsten Trajektorie herum zu bilden;
b. die Punktgruppen gefiltert werden, um Wegepunkt-Clouds zu erhalten, die jeweils einer Punktgruppe entsprechen, in denen die Punkte der Gruppe entfernt sind, die andere Gruppen überlappen, um Punktgruppen, die sich nicht überlappen, um jeden Punkt der repräsentativsten Trajektorie herum zu erhalten;
c. in jeder Wegepunkt-Cloud, die jedem Punkt zugeordneten Zeitwerte t analysiert werden, um Zeitgrenzen für jeden Wegepunkt zu erzeugen;
d. die Wegepunkte jeder optimalen Route aus den Punkten der entsprechenden repräsentativsten Trajektorie und der entsprechenden Wegepunkt-Clouds bestehen.

2. Bestimmungsverfahren nach Anspruch 1, wobei der zweite Clustering-Algorithmus ein Clustering-Algorithmus vom Typ k-NN ist.

3. Bestimmungsverfahren nach Anspruch 2, wobei bei dem zweiten Clustering-Algorithmus vom Typ k-NN k auf 1 gesetzt ist, was bedeutet, dass jeder Punkt der reduzierten Trajektorien dem einzigen nächstgelegenen Wegepunkt zugewiesen ist.

4. Bestimmungsverfahren nach Anspruch 1, 2 oder 3, wobei die Ausreißer entfernt werden, indem die Punkte reduzierter Trajektorien verworfen werden, die außerhalb des 95-%-Perzentils der Zeitwerte innerhalb jeder Wegepunkt-Cloud liegen.

5. Bestimmungsverfahren nach einem der Ansprüche 1 bis 4, wobei jeder Wegepunkt einer repräsentativsten Trajektorie eine Toleranz in Raum und Zeit enthält.

6. Bestimmungsverfahren nach Anspruch 5, wobei die Toleranz jedes Wegepunktes in der räumlichen und zeitlichen Dimension zunächst ein Kreis ist und anschließend so zugeschnitten wird, dass nur die Grenzen der Navigationsbereiche sichtbar sind, die von den Seefahrzeugen gemäß den historischen GNSS-Daten tatsächlich befahren worden sind.

7. Bestimmungsverfahren nach einem der Ansprüche 1 bis 6, wobei Toleranzgrenzen um jeden Wegepunkt herum auf der Basis der Punkte in Zeit und Raum aller reduzierten Trajektorien bestimmt werden, die diesem Cluster zugehörig sind.

8. Bestimmungsverfahren nach einem der Ansprüche 1 bis 7, mit dem Schritt zum Entfernen von Rauschen durch Herausfiltern derjenigen Informationen aus den historischen GNSS-Daten, die unrealistischen Schiffsgeschwindigkeitswerten entsprechen, d.h. durch Anwenden von Schwellenwerten auf die Schiffsgeschwindigkeit, um Ausreißer in den historischen GNSS-Daten zu entfernen.

9. Bestimmungsverfahren nach einem der Ansprüche 1 bis 8, wobei die historischen GNSS-Daten unter Verwendung der Douglas-Peucker-Punktereduktionsmethode reduziert werden.

10. Bestimmungsverfahren nach einem der Ansprüche 1 bis 9, wobei die Ähnlichkeit zwischen reduzierten Trajektorien unter Verwendung des Dynamic-Time-Warping-Distanzmaßes gemessen wird.

11. Bestimmungsverfahren nach einem der Ansprüche 1 bis 10, wobei der erste Clustering-Algorithmus der Dominant-Sets-Clustering-Algorithmus ist.

12. Bestimmungsverfahren nach Anspruch 11, wobei für jeden Cluster reduzierter Trajektorien deren repräsentativste reduzierte Trajektorie dem Zentroid entspricht, der durch den Dominant-Sets-Clustering-Algorithmus ausgegeben wird, und wobei die Punkte des Zentroids die Wegepunkte der repräsentativsten reduzierten Trajektorie darstellen.

13. Bestimmungsverfahren nach Anspruch 12, wobei jeder Wegepunkt durch eine Markierung auf dem Zentroid gekennzeichnet ist, die die Zeit angibt, zu der das Seefahrzeug diesen Wegepunkt erreichen sollte.

14. Verfahren zum Manövrieren eines Seefahrzeugs, mit den Schritten:
Bestimmen mindestens einer optimalen Route mit Hilfe des Bestimmungsverfahrens nach einem der Ansprüche 1 bis 13; und
Manövrieren des Seefahrzeugs derart, dass es der optimalen Route folgt.

15. Rechensystem mit einem Prozessor, der dazu eingerichtet ist, das Bestimmungsverfahren nach einem der Ansprüche 1 bis 13 auszuführen.

## Revendications

1. Méthode de détermination pour déterminer des itinéraires optimaux de navigation de véhicules de marine par l'analyse de données GNSS historiques ; dans laquelle les données GNSS historiques comprennent des trajectoires historiques spatiotemporelles constituées de séquences de points, chacun d'eux étant défini par une position x, une position y et une valeur temporelle t ; chaque itinéraire optimal inclut une séquence de points de cheminement ; la méthode de détermination comprend les étapes suivantes :
la réduction des données GNSS historiques en transformant chaque trajectoire historique en une trajectoire réduite correspondante, en éliminant tous les points de la trajectoire historique qui ne déterminent pas de changements de vitesse et/ou de cap, c'est-à-dire en conservant uniquement les points de la trajectoire historique qui déterminent des changements de vitesse et/ou de cap ;
l'évaluation de la similarité entre des trajectoires réduites, en déterminant de ce fait, pour chaque trajectoire réduite, un degré de similarité entre toutes les autres trajectoires réduites ;
l'application d'un premier algorithme de groupement qui, sur la base de la similarité entre des trajectoires réduites, forme une ou plusieurs grappes de trajectoires réduites, en assignant, à chaque grappe, toutes et seulement les trajectoires réduites qui sont similaires entre elles ;
l'extraction de la trajectoire réduite la plus représentative de chaque grappe formée par l'application du premier algorithme de groupement ; et
l'identification des itinéraires optimaux en tant que les trajectoires réduites les plus représentatives ;
la méthode de détermination est **caractérisée en ce que** :
a. chaque trajectoire réduite la plus représentative d'une grappe est utilisée pour initialiser un second algorithme de groupement qui est appliqué à tous les points de toutes les trajectoires réduites appartenant à ladite grappe pour créer des groupes de points autour des points de la trajectoire la plus représentative ;
b. les groupes de points sont filtrés pour obtenir des nuages de points de cheminement, chacun d'eux correspondant à un groupe de points obtenus après avoir supprimé les points de ce groupe qui chevauchent d'autres groupes, de manière à obtenir des groupes de points qui ne se chevauchent pas autour de chaque point de la trajectoire la plus représentative ;
c. dans chaque nuage de points de cheminement, les valeurs temporelles t associées à chaque point sont analysées pour créer des frontières de temps pour chaque point de cheminement ;
d. les points de cheminement de chaque itinéraire optimal se composent des points de la trajectoire la plus représentative correspondante et des nuages de points de cheminement correspondants.

2. Méthode de détermination selon la revendication 1, dans laquelle le second algorithme de groupement est un algorithme de groupement de type k-NN.

3. Méthode de détermination selon la revendication 2, dans laquelle, dans le second algorithme de groupement de type k-NN, k est réglé à 1, ce qui signifie que chaque point des trajectoires réduites est assigné au point de cheminement le plus proche unique.

4. Méthode de détermination selon la revendication 1, 2 ou 3, dans laquelle les valeurs aberrantes sont supprimées en éliminant les points de trajectoires réduites se trouvant à l'extérieur du 95^{ème} percentile des valeurs temporelles à l'intérieur de chaque nuage de points de cheminement.

5. Méthode de détermination selon l'une des revendications 1 à 4, dans laquelle chaque point de cheminement d'une trajectoire la plus représentative inclut une tolérance dans l'espace et dans le temps.

6. Méthode de détermination selon la revendication 5, dans laquelle la tolérance de chaque point de cheminement dans les dimensions d'espace et de temps est initialement un cercle qui est ensuite découpé pour visualiser uniquement les frontières des zones de navigation dans lesquelles les véhicules de marine ont effectivement navigué selon les données GNSS historiques.

7. Méthode de détermination selon l'une des revendications 1 à 6, dans laquelle des limites de tolérance autour de chaque point de cheminement sont déterminées sur la base des points dans le temps et dans l'espace de toutes les trajectoires réduites qui appartiennent à cette grappe.

8. Méthode de détermination selon l'une des revendications 1 à 7, comprenant l'étape de la suppression de bruit par le filtrage, dans les données GNSS historiques, des informations correspondant à des valeurs de vitesse de navire irréalisables, c'est-à-dire par l'application de seuils à la vitesse de navire pour supprimer les valeurs aberrantes dans les données GNSS historiques.

9. Méthode de détermination selon l'une des revendications 1 à 8, dans laquelle les données GNSS historiques sont réduites en utilisant la méthode de réduction de points Douglas-Peucker.

10. Méthode de détermination selon l'une des revendications 1 à 9, dans laquelle la similarité entre des trajectoires réduites est mesurée en utilisant la mesure de distance d'alignement temporel dynamique.

11. Méthode de détermination selon l'une des revendications 1 à 10, dans laquelle le premier algorithme de groupement est l'algorithme de groupement d'ensembles dominants.

12. Méthode de détermination selon la revendication 11, dans laquelle, pour chaque grappe de trajectoires réduites, sa trajectoire réduite la plus représentative correspond au centroïde qui est délivré par l'algorithme de groupement d'ensembles dominants et les points du centroïde représentent les points de cheminement de la trajectoire réduite la plus représentative.

13. Méthode de détermination selon la revendication 12, dans laquelle chaque point de cheminement est marqué par un marqueur sur le centroïde qui indique le temps auquel le véhicule de marine devrait atteindre ce point de cheminement.

14. Méthode de manœuvre d'un véhicule de marine, comprenant les étapes suivantes :
la détermination d'au moins un itinéraire optimal au moyen de la méthode de détermination selon l'une des revendications 1 à 13 ; et
la manœuvre du véhicule de marine pour suivre l'itinéraire optimal.

15. Système informatique comprenant un processeur apte à réaliser la méthode de détermination selon l'une des revendications 1 à 13.
